**Europäisches Patentamt**

**European Patent Office**

**Office européen des brevets**

(11) Veröffentlichungsnummer: **0 312 881 B1**

## EUROPÄISCHE PATENTSCHRIFT

(45) Veröffentlichungstag der Patentschrift: **11.12.91**

(51) Int. Cl.⁵: **A22C 21/00**

(21) Anmeldenummer: **88116816.5**

(22) Anmeldetag: **11.10.88**

(54) Verfahren zum Entfernen der Flügel von Geflügelkörpern und Einrichtung zur Durchführung des Verfahrens.

(30) Priorität: **23.10.87 DE 3735849**

(43) Veröffentlichungstag der Anmeldung:
**26.04.89 Patentblatt 89/17**

(45) Bekanntmachung des Hinweises auf die
Patenterteilung:
**11.12.91 Patentblatt 91/50**

(84) Benannte Vertragsstaaten:
**AT BE CH DE ES FR GB IT LI LU NL SE**

(56) Entgegenhaltungen:
EP-A- 0 164 167      NL-A- 7 316 326
NL-A- 8 303 683      US-A- 2 807 046
US-A- 4 016 624      US-A- 4 385 421
US-A- 4 424 608      US-A- 4 597 136
US-A- 4 648 155

(73) Patentinhaber: **NORDISCHER MASCHINENBAU
RUD. BAADER GMBH + CO KG
Geniner Strasse 249
W-2400 Lübeck(DE)**

(72) Erfinder: **Callsen, Hans, Dipl.-Ing.
Am Bormbrook 2
W-2407 Bad Schwartau(DE)**
Erfinder: **Richert, Wilhelm
1412 Kelly Bridge Rd.
Dawnsonvill Georgia 30534(US)**
Erfinder: **Braeger, Horst
Auf dem Ruhm 14
W-2400 Lübeck(DE)**

## Beschreibung

Die Erfindung bezieht sich auf eine Einrichtung zum maschinellen Entfernen der Flügel von Geflügelkörpern mit einem die zu bearbeitenden Geflügelkörper formschlüssig haltenden und in ihrer Symmetrieebene vorschiebenden Fördermittel sowie mit einer Trenneinrichtung aus symmetrisch zu beiden Seiten der Umlaufebene des Fördermittels angeordneten Trennwerkzeugen für die Flügel, sowie mit im Bereich der Trenneinrichtung angeordneten, die Flügel erfassenden und von dem Geflügelkörper wegführenden Führungsmitteln.

Bei einer derartigen Bearbeitung von Geflügelkörpern kommt es insbesondere im Hinblick auf eine weitere maschinelle Handhabung, beispielsweise zum Gewinnen des Brustfleisches in Form von Filets, darauf an, daß die Flügel unter geringstmöglichem Verlust an verzehrbarem Fleisch und so abgetrennt werden, daß keine störenden Knochenreste im Bereich der Trennstelle verbleiben.

Die NL 73 16 326 zeigt eine Einrichtung zum Abschneiden der Extremitäten von Geflügelkörpern durch angetriebene kreisförmige Schermesser, welche von der Bauchseite her zwischen die Extremitäten und den Rumpf eingesteuert werden, wenn dieser die Werkzeuge durch ein Fördersystem aus einem unteren und oberen Transportband gefördert passiert. Dabei sind den Schermessern Führungsrollen geringen Durchmessers zugeordnet, welche in Verbindung mit einer elastischen Halterung der Schermessereinheit eine Führung derselben durch die Körperkontur und Einstellung der Schnittebene entsprechend den jeweiligen Gegebenheiten ermöglichen.

Eine weitere Einrichtung der eingangs genannten Art ist aus der US-PS 4 648 155 zu entnehmen. Bei dieser Einrichtung werden noch mit den Flügeln behaftete Geflügelkörper mit der Brustseite nach oben aufgesattelt einem Kreissägenpaar mit der Halsöffnung voraus zugeleitet, wobei die Flügel durch in der Gelenkbeuge vom Rücken her eingreifende Führungsschienen unterstützt werden. Die Trennung der Flügel von dem Geflügelkörper erfolgt durch Anschnitt von vorn, wobei die Trennung nicht vollständig durchgeführt wird. Die verbleibende Verbindung zwischen den Flügeln und dem Brustfleisch wird anschließend genutzt, um dieses durch Hochziehen der Flügel mit von der Karkasse abzuziehen.

Bei diesen Einrichtungen erfolgt die Trennung der Flügel durch Trennen des Oberarmknochens, wodurch unvermeidbar ist, daß Reste zumindest der Gelenkkuppen derselben an dem Geflügelkörper verbleiben, welcher Umstand bei einer Weiterverarbeitung zwecks Gewinnung des Brustfleisches in Form von Filets sowohl bezüglich des mechanischen Prozesses als auch im Hinblick auf Knochenfreiheit und Fleischausbeute zu Schwierigkeiten führt.

Aus der US-AS-4 424 608 ist weiter eine Geflügel-Verarbeitungsmaschine u. a. zum Entfernen der Flügel bekannt. Bei dieser Maschine wird der Geflügelkörper mit dem Schwanzende voraus auf Fördermitteln formschlüssig gehalten und einer Trenneinrichtung für die Flügel zugeführt, welche aus symmetrisch zu beiden Seiten der Umlaufebene der Fördermittel angeordneten Trennwerkzeugen mit jeweils einem Messerblatt bestehen.

Im Bereich der Trenneinrichtung sind Führungsmittel vorgesehen, die die Flügel erfassen und von dem Geflügelkörper wegführen.

Diese Vorgehensweise vermeidet zwar weitgehend die Nachteile der beiden oben zitierten Vorschläge, doch ist eine Integration dieses Verfahrens beispielsweise in eine Brustfleischfiletiereinrichtung aufgrund der vorgesehenen Förderrichtung erschwert, da die anatomischen Gegebenheiten eine entsprechende Bearbeitung in optimaler Weise nicht zulassen.

Der Erfindung liegt die Aufgabe zugrunde, eine sich leicht an die Konturen des Geflügelkörpers anpassende Trenneinrichtung für die Flügel vorzuschlagen, welche eine wirtschaftliche Integration , z. B. in eine Brustfleisch-Filetiereinrichtung ermöglicht und sicherstellt, daß das Abtrennen der Flügel unter hoher Genauigkeit in dem Gelenkspalt erfolgt.

Diese Aufgabe wird erfindungsgemäß durch eine Einrichtung gelöst, welche dadurch gekennzeichnet ist, daß die Trenneinrichtung ein Paar symmetrisch zu der Umlaufebene des Fördermittels angeordneter Messerblätter umfaßt, deren Flanken in Grundstellung im wesentlichen parallel zueinander und deren Schneiden in Förderrichtung ansteigend ausgerichtet sind, wobei die Messerblätter bezüglich ihres Abstandes zueinander sowie der gegenseitigen Winkelstellung ihrer Flanken verdrängbar und steuerbar sind.

Die damit erzielbaren Vorteile bestehen insbesondere darin, daß die Flügel von dem Geflügelkörper in einer Weise getrennt werden, daß das Gewinnen knochenfreier Brustfilets bei hoher Fleischausbeute in einem integrierten Prozeß ohne Schwierigkeiten möglich ist.

In den Unteransprüchen sind Merkmale angeführt, die im Sinne einer sicheren Funktion wirksame vorteilhafte Ausführungsvarianten wiedergeben.

So hilft eine an dem gegen die Laufrichtung weisenden Ende jedes der Messerblätter angebrachte kufenförmig gestaltete Führung, die Messerblätter an den jeweils zu bearbeitenden Geflügelkörper korrekt anzupassen. Auch kann von Vorteil sein, wenn der Trenneinrichtung ein mit dieser eine Einheit bildendes Trennwerkzeug zum separaten Durchschneiden der Flügelsehnen vorgeschaltet ist. Dabei kann das vorgeschaltete Trennwerkzeug ein Paar angetriebener Kreismesser umfassen, deren Kreisschneiden die jeweils zugeordneten kufenförmigen Führungen um ein geringes überragen und mit den nachgeordneten Messerblättern fluchten. Bei den das Spreizen und Ausrenken der Flügel bewirkenden Führungs-bzw. Haltemitteln hat sich ein Paar mit Mitnehmern bestückter endloser Förderer bewährt, deren Fortschrittgeschwindigkeit gleich oder größer derjenigen des Fördermittels für den Geflügelkörper sein kann.

Die Erfindung wird nachfolgend anhand in der Zeichnung dargestellter Ausführungsbeispiele näher erläutert. Dabei zeigt jeweils in schematischer Darstellung

Fig. 1    eine axonometrische Gesamtansicht einer Trenneinrichtung,

Fig. 2    eine Stirnansicht der Einrichtung nach Fig. 1 vom Beschickende her betrachtet,

Fig. 3    eine ausschnittweise Ansicht des Obertrums des Förderers für die Flügel mit einem Mitnehmer,

Fig. 4    eine axonometrische Gesamtansicht eines weiteren Ausführungsbeispiels der Trenneinrichtung,

Fig. 5    eine Seitenansicht der Einrichtung nach Fig. 4 vom Beschickende her betrachtet.

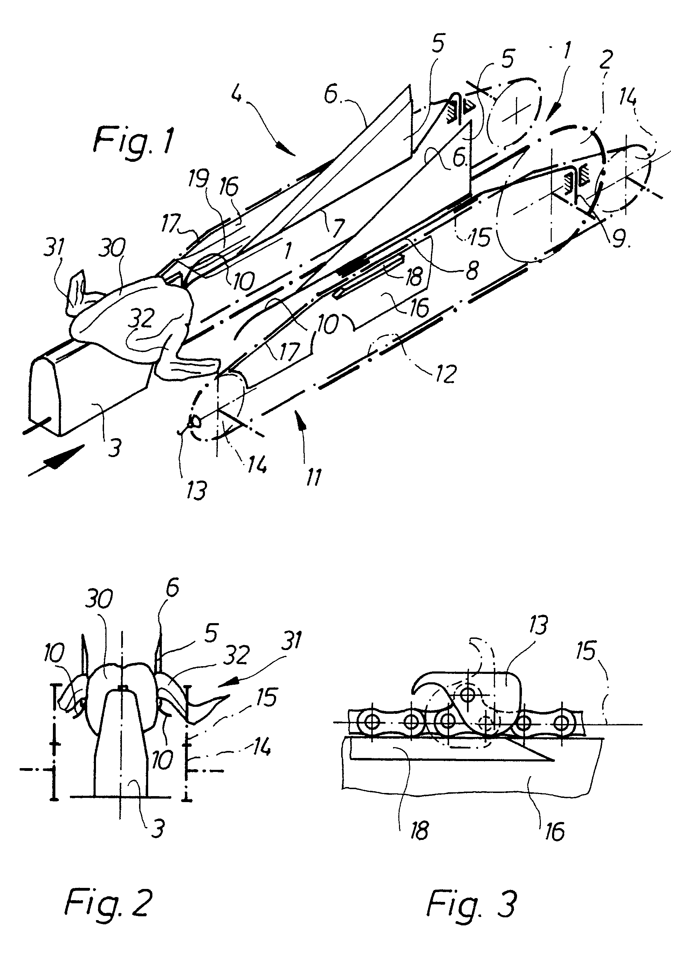

Die Einrichtung gemäß Fig. 1 ist auf einem nicht gezeigten Gestell aufgebaut, in welchem ein nur angedeutet gezeigtes, durch zwei Umlenkräder 2 geführtes Fördermittel 1 beispielsweise aus einer endlosen Kette in geeigneter Weise angetrieben umläuft. Das Fördermittel 1 ist mit Stützsätteln 3 bestückt, die die zu bearbeitenden Geflügelkörper 30 mit dem Brustbein nach oben und dem Kamm des Brustbeins in Förderrichtung unter Unterstützung an dessen Innenseite aufnehmen. Die Bahn der Stützsättel 3 führt auch durch den Bereich einer Trenneinrichtung 4 hindurch, welche ein Paar symmetrisch zu der Umlaufebene des Fördermittels 1 angeordneter Messerblätter 5 umfaßt. Die Messerblätter 5 haben je die Gestalt einer Dreiecksfläche, deren eine Seite als Schneide 6 ausgebildet ist. Die Anordnung der Messerblätter 5 ist so getroffen, daß ihre Dreiecksflächen im wesentlichen parallel zueinander verlaufen, wobei deren Grundkanten 7 im wesentlichen horizontal und die Schneiden 6 in spitzem Winkel dazu ansteigend ausgerichtet sind. Jedes Messerblatt 5 ist an einem Tragarm 8 befestigt, der für das zugehörige Messerblatt 5 gleichzeitig eine Schwenkachse bildet, die im wesentlichen parallel zu der Bahn der Stützsättel 3 verläuft. Jeder Tragarm 8 ist wiederum um eine zu diesem senkrecht angeordnete Achse 9 schwenkbar. Die Messerblätter 5 werden in der besagten Grundstellung durch nicht gezeigte Federn gehalten, gegen die sie voneinander weg ausweichbar sind. Jeweils in Verlängerung der Grundkante 7 weist jedes Messerblatt 5 eine kufenförmig gebogene Führung 10 auf, die sich gegen die Förderrichtung des Fördermittels 1 erstreckt.

Im Bereich der Trenneinrichtung 4 sind mit den Flügeln 31 in Wirkverbindung tretende Führungsmittel 11 angeordnet. Sie umfassen ein Paar Haltemittel aus einem Paar endloser, mit steuerbaren Mitnehmern 13 bestückter Förderer 12, die jeweils aus einer Gliederkette bestehen können. Die Förderer 12 werden durch Umlenkräder 14 in zu der Umlaufebene des Fördermittels 1 parallelen Ebenen geführt, wobei jeder Förderer 12 mit seinem Obertrum 15 in einem gewissen Abstand neben der Außenflanke des jeweils zugeordneten Messerblattes 5 und im wesentlichen parallel zu dessen Grundkante 7 verläuft und mit dem Fördermittel 1 mitlaufend angetrieben ist. Der Obertrum 15 ist mittels einer Stützschiene 16 in einem mittleren Teilbereich über die Tangente an die Umlenkräder 14 hinaus unter Bildung von Auflaufschrägen 17 angehoben und dadurch etwa in Höhe der Bahn der Flügel 31 geführt. Im Bereich des hochgeführten Obertrums 15 befindet sich eine Kurvenschiene 18 für die Steuerung der Mitnehmer 13 aus einer durch eine nicht gezeigte Feder bewirkten Aufrichtstellung in eine Schließstellung.

Schließlich befindet sich über der Bahn der Stützsättel 3 ein nur angedeutet dargestellter, gegen Federkraft vertikal verdrängbarer Niederhalter 19 zum Niederhalten des zu bearbeitenden Geflügelkörpers auf dem Stützsattel 3.

Die Wirkungsweise der Vorrichtung nach Fig. 1 ist folgende: Ein durch einen zwischen den unteren und den oberen Extremitäten quer durch das Rückgrat gelegten Schrägschnitt vorbereitetes Bruststück eines Geflügelkörpers mit Flügeln wird mit dem Brustbein nach oben und dem Halsteil voraus auf den Stützsattel 3 gestülpt und unter Niederhalten mittels des Niederhalters 19 der Trenneinrichtung 4 zugeführt. Dabei laufen die Flügel mit ihren Oberarmknochen zunächst auf die in Verlängerung der Messerblätter 5 angeordneten Führungen 10 auf, wobei die Messerblätter 5 auf einen gegenseitigen Abstand verdrängt werden, der der Breite des jeweils zu bearbeitenden Geflügelkörpers entspricht, so daß die Führungen 10 von der Rückenseite des Geflügelkörpers 30 her in die Beuge zwischen Oberarmknochen 32 und Geflügelkörper 30 eindringen. Mit fortschreitendem Vorschub gelangen die Flügel 31 mit ihren Oberarmknochen 32 auf den Auflaufschrägen 17 der Förderer 12 zur Auflage und werden zunehmend nach oben verdrängt, wobei durch die Mitnehmer 13 eine rückwärtige Stützung der Flügel 31 im Bereich des Oberarmknochens 32 erfolgt. Dieser letztere Vorgang kann durch leicht höhere Geschwindigkeit des Förderers 12 gegenüber der Sattelgeschwindigkeit optimiert werden, was ermöglicht, daß der Mitnehmer 13 sich an den Flügel heranschieben kann. Die Abstimmung ist dann so getroffen, daß die Anlage etwa mit Erreichen der Messerblätter 5 erfolgt, womit auch gleichzeitig die Steuerung der Mitnehmer 13 mittels der Kurvenschiene 18 in den Oberarmknochen formschlüssig umfassende Schließstellung erfolgt. Die Schneiden 6 der Messerblätter 5 beginnen nun von der besagten Beuge her zunächst die Häute und Bänder in dem Bereich des Flügelgelenkes zu trennen und schließlich die die Aufwärtsbewegung der Flügel 31 steuernde Flügelsehne zu durchschneiden. Dank der zweiachsigen Verdrängbarkeit der Messerblätter 5 verläuft dieser Prozeß im Bereich des Gelenkspaltes, der sich nun nach Durchschneiden der Flügelsehne aufgrund der durch den Förderer 12 erzeugten und auf den Flügel 31 einwirkenden Biegespannung ohne wesentlichen Kraftaufwand vergrößert. Der fortschreitende Trennschnitt verläuft daher weiter in dem genannten Gelenkspalt, so daß schließlich die vollständige Trennung des Flügels 31 ohne Knochenanschnitt oder -abschnitt erfolgt.

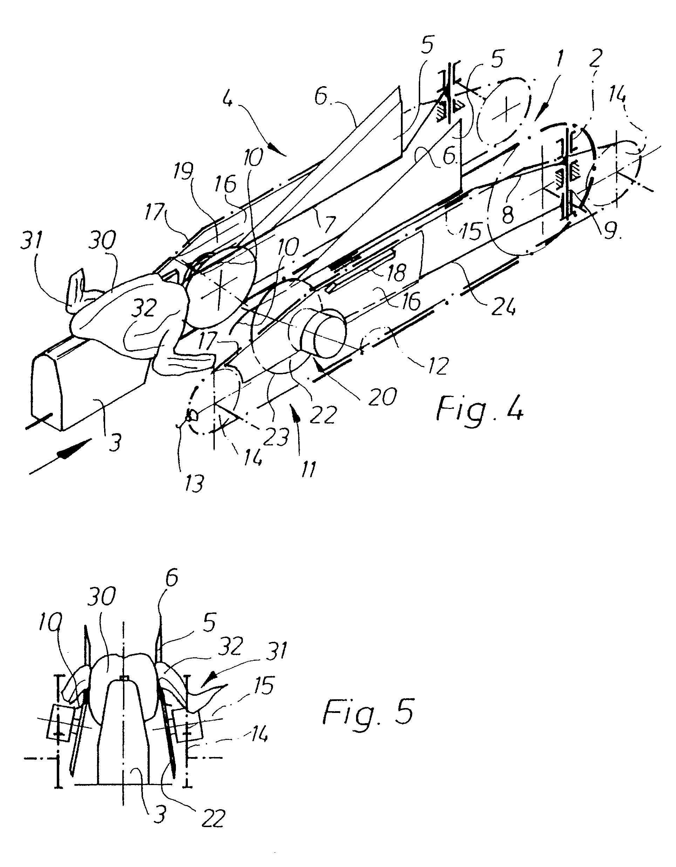

Wie in den Figuren 4 und 5 dargestellt, kann der Trenneinrichtung 4 ein Trennwerkzeug 20 vorgeschaltet sein. Dieses Trennwerkzeug 20 umfaßt ein Paar auf geeignete Weise angetriebener Kreismesser 22 , die vorzugsweise leicht dachförmig zueinander gestellt sind. Sie sind im Bereich der Führungen 10 angeordnet und liegen an deren Außenseiten eventuell unter Belassen eines geringen Spaltes an, wobei die Kreisschneiden 23 die Führungen 10 um einen geringen Betrag überragen. Die beiden Kreismesser-Baueinheiten sind je auf einem Schwenkarm 24 montiert, der um die jeweilige Achse 9 der zugehörigen Messerblätter 5 schwenkbar ist. Durch geeignete Kopplung mit dem das entsprechende Messerblatt 5 tragenden Tragarm 8 vollzieht die jeweilige Kreismesser-Baueinheit die Schwenkbewegung desselben mit.

Mit der Vorschaltung des Trennwerkzeuges 20 wird sichergestellt, daß die oft zähen Häute und Bänder zwischen dem Flügel 31 und demm Geflügelkörper 30 sicher getrennt werden, was Voraussetzung für die einwandfreie Durchführung des erfindungsgemäßen Verfahrens ist.

Die Kreismesser 22 des Trennwerkzeuges 20 können auch bei Belassen des entsprechenden Freiheitsgrades bezüglich ihrer Höhenlage in Abhängigkeit von der Größe des jeweils zu bearbeitenden Geflügelkörpers 30 steuerbar sein. Zu diesem Zweck können geeignete Koppelglieder zwischen dem Niederhalter 19 und den Kreismesser-Baueinheiten vorgesehen sein, die die größenabhängige Verdrängungsbewegung des Niederhalters 19 auf die Kreismesser-Baueinheit übertragen.

Die Halterung der Geflügelkörper 30 auf dem Sattel 3 kann auch durch eine Klammer erfolgen, die den Geflügelkörper 30 vorzugsweise an dem der Halsöffnung zuweisenden Teil des Brustbeins (sternum) erfaßt und festhält.

**Patentansprüche**

1. Einrichtung zum maschinellen Entfernen der Flügel von Geflügelkörpern mit einem Fördermittel (1) , ausgebildet zum formschlüssigen Halten und zum Vorschieben der zu bearbeitenden Geflügelkörper in ihrer Symmetrieebene, mit einer Trenneinrichtung (4) aus symmetrisch zu beiden Seiten der Umlaufebene des Fördermittels (1) angeordneten Trennwerkzeugen für die Flügel (31) , die ein Paar symmetrisch zu der Umlaufebene des Fördermittels (1) angeordneter Messerblätter (5) umfassen, sowie mit im Bereich der Trenneinrichtung (4) angeordneten Führungsmitteln, ausgebildet zum Erfassen und Wegführen der Flügel (31) von dem Geflügelkörper, **dadurch gekennzeichnet,** daß die Flanken der Messerblätter (5) in Grundstellung im wesentlichen parallel zueinander und deren Schneiden (6) in Förderrichtung ansteigend ausgerichtet sind, wobei die Befestigung der Messerblätter (5) derart ausgebildet ist, daß die Messerblätter (5) bezüglich ihres Abstandes zueinander sowie der gegenseitigen Winkelstellung ihrer Flanken verdrängbar und steuerbar sind.

2. Einrichtung nach Anspruch 1 , **dadurch gekennzeichnet,** daß jedes der Messerblätter (5) an seinem gegen die Laufrichtung des Fördermittels (1) weisenden Ende mit einer kufenförmig gestalteten Führung (10) zur Unterstützung der Flügel (31) versehen ist.

3. Einrichtung nach Anspruch 1 oder 2 , **dadurch gekennzeichnet,** daß die Messerblätter (5) mit einer Oszillationsbewegung beaufschlagbar sind.

4. Einrichtung nach einem der Ansprüche 1 bis 3 , **dadurch gekennzeichnet,** daß der Trenneinrichtung (4) ein mit dieser eine Einheit bildendes weiteres Trennwerkzeug (20) zum separaten Durchschneiden der Flügelsehnen vorgeschaltet ist.

5. Einrichtung nach Anspruch 4 , **dadurch gekennzeichnet,** daß das weitere Trennwerkzeug (20) ein Paar angetriebener Kreismesser (22) umfaßt, die dachförmig und symmetrisch zu beiden Seiten der Umlaufebene des Fördermittels (1) angeordnet sind und wobei jedes Kreismesser (22) im Bereich der kufenförmigen Führung (10) in der Weise angebracht ist, daß jeweils der höchstgelegene Teil seiner Kreisschneide (23) die zugeordnete kufenförmige Führung (10) um ein geringes überragt und mit der Schneide (6) des nachgeordneten Messerblattes (5) im wesentlichen fluchtet.

6. Einrichtung nach einem der Ansprüche 1 bis 5 , **dadurch gekennzeichnet,** daß als Führungsmittel (11) ein Paar zu beiden Seiten der Umlaufebene des Fördermittels (1) angeordneter Haltemittel für die Flügel (31) vorgesehen ist, die das Fördermittel (1) begleitend antreibbar sind.

7. Einrichtung nach Anspruch 6 , **dadurch gekennzeichnet,** daß als Haltemittel ein Paar mit Mitnehmern (13) bestückter endloser Förderer (12) vorgesehen ist, der mit gleicher oder größerer Fortschrittsgeschwindigkeit wie sie das Fördermittel aufweist, antreibbar ist.

8. Einrichtung nach einem der Ansprüche 6 oder 7 , **dadurch gekennzeichnet,** daß jeder Mitnehmer (13) als gesteuerte Klammer ausgebildet ist.

## Claims

1. Equipment, for the mechanical removal of the wings of poultry carcasses, with a conveying means (1), which is constructed for the shape-locking retention and for the advancing of the poultry carcasses, which are to be treated, in their plane of symmetry, with a severing equipment (4) with severing tools for the wings (31), which tools are arranged symmetrically at both sides of the plane of circulation of the conveying means (1) and comprise a pair of knife blades (5), which are arranged symmetrically to the plane of circulation of the conveying means (1), as well as with guide means which are arranged in the region of the severing equipment (4) and constructed for the seizing and guiding away of the wings (31) from the poultry carcass, characterised thereby, that the flanks of the knife blades (5) are oriented in base setting to be each substantially parallel to the other and their cutting edges to be rising in conveying direction, wherein the fastening of the knife blades (5) is constructed in such a manner that the knife blades (5) are displaceable and controllable in respect of their spacing each from the other as well as of the mutual angular setting of their flanks.

2. Equipment according to claim 1, characterised thereby, that each of the knife blades (5) is provided at its end pointing opposite to the running direction of the conveying means (1) with a skid-shaped guide (10) for the support of the wings (31).

3. Equipment according to claim 1 or 2, characterised thereby, that the knife blades (5) are loadable by an oscillatory movement.

4. Equipment according to one of the claims 1 to 3, characterised thereby, that the severing equipment (4) is preceded by a further severing tool (20), which forms a unit with this, for the separate cutting-through of the wing sinews.

5. Equipment according to claim 4, characterised thereby, that the further severing tool (20) comprises a pair of circular knives (22), which are arranged in roof shape and symmetrically at both sides of the plane of circulation of the conveying means (1) and wherein each circular knife (22) is arranged in the region of the skid-shaped guide (10) in such a manner that the respectively highest part of its circular cutting edge (23) projects a little beyond the associated skid-shaped guide (10) and is substantially in alignment with the cutting edge (6) of the downstream knife blade (5).

6. Equipment according to one of the claims 1 to 5, characterised thereby, that a pair of retaining means, which are arranged at both sides of the plane of circulation of the conveying means (1) and drivable to accompany the conveying means (1), are provided as guide means (11) for the wings (31).

7. Equipment according to claim 6, characterised thereby, that a pair of endless conveyors (12), which are equipped with entraining members (13) and drivable at equal or greater speed of advance as displayed by the conveying means, is provided as retaining means.

8. Equipment according to one of the claims 6 and 7, characterised thereby, that each entraining member (13) is constructed as controlled clamp.

## Revendications

1. Dispositif pour enlever mécaniquement les ailes de corps de volailles abattues, comportant un moyen de transport (1) conçu pour réaliser le maintien par complémentarité de forme et l'avance des corps de volailles à traiter le long de leur plan de symétrie, un dispositif de coupe (4) constitué d'outils de coupe pour les ailes (31), qui sont disposés symétriquement par rapport au plan de révolution du moyen de transport (1) de chaque côté de celui-ci, et qui comprennent une paire de lames de coupe (5) disposées symétriquement par rapport au plan de révolution du moyen de transport (1), ainsi que de moyens de guidage disposés dans la zone du dispositif de coupe (4) et conçus pour saisir et éloigner les ailes (31) du corps de volaille, caractérisé en ce que les flancs des lames de coupe (5), en position initiale, sont orientés de manière à être sensiblement parallèles entre eux et leurs arêtes de coupe (6) de manière à s'élever dans la direction du transport, la fixation des lames de coupe (5) étant réalisée de telle sorte que les lames de coupe (5) sont susceptibles d'être déplacées et actionnées de manière commandée, quant à leur écartement mutuel et à la position angulaire réciproque de leurs flancs.

2. Dispositif selon la revendication 1, caractérisé en ce que chacune des lames de coupe (5) est munie, à son extrémité dirigée à l'encontre du sens de déplacement du moyen de transport (1), d'un guidage (10) en forme de patin destiné à soutenir les ailes (31).

3. Dispositif selon la revendication 1 ou 2, caractérisé en ce qu'il est possible de communiquer un mouvement d'oscillation aux lames de coupe (5).

4. Dispositif selon l'une des revendications 1 à 3, caractérisé en ce que le dispositif de coupe (4) est précédé par un autre outil de coupe (20) formant avec lui un ensemble et destiné à couper séparément les tendons des ailes.

5. Dispositif selon la revendication 4, caractérisé en ce que l'autre outil de coupe (20) comprend une paire de lames de coupe circulaires (22) entraînées, qui sont disposées à la manière d'un toit, symétriquement par rapport au plan de révolution du moyen de transport (1) de chaque côté de celui-ci, chacune des lames de coupe circulaires (22) étant montée dans la zone du guidage en forme de patin (10), de manière à ce que la partie située la plus en hauteur de son arête de coupe circulaire (23), dépasse légèrement du guidage en forme de patin (10) qui lui est associé et est sensiblement alignée avec l'arête de coupe (6) de la lame de coupe (5) qui lui succède.

6. Dispositif selon l'une des revendications 1 à 5, caractérisé en ce qu'en guise de moyen de guidage (11) il est prévu une paire de moyens de maintien pour les ailes (31), qui sont disposés de chaque côté du plan de révolution du moyen de transport (1) et qui peuvent être entraînés de manière à accompagner le moyen de transport (1).

7. Dispositif selon la revendication 6, caractérisé en ce qu'en guise de moyens de maintien il est prévu une paire de transporteurs sans fin (12) équipés d'entraîneurs (13) et susceptibles d'être entraînés avec une vitesse d'avance égale ou supérieure à celle que présente le moyen de transport.

8. Dispositif selon l'une des revendications 6 ou 7, caractérisé en ce que chaque entraîneur (13) se présente sous la forme d'une griffe actionnée de manière commandée.

Fig. 1

Fig. 2

Fig. 3

Fig. 4

Fig. 5